# EUROPÄISCHE PATENTANMELDUNG

(11) **EP 2 193 883 A1**
(43) Veröffentlichungstag der Anmeldung: **09.06.2010**
(21) Anmeldenummer: 09176536.2
(22) Anmeldetag: 19.11.2009
(51) Int. Cl.: B25C 1/18, F16B 15/08, F16B 27/00

(54) **Befestigungselemente-Magazinstreifen**

(30) Priorität: 05.12.2008 DE 102008044368
(71) Anmelder: HILTI Aktiengesellschaft, 9494 Schaan (LI)
(72) Erfinder: Miescher, Stefan, 9494, Schaan (LI); Fielitz, Harald, 88131 Lindau (DE); Odoni, Walter, 9498, Planken (LI); Spasov, Robert, 9494, Schaan (LI)
(74) Vertreter: Söllner, Oliver

(57) **Zusammenfassung**

Die vorliegende Erfindung betrifft einen Befestigungselemente-Magazinstreifen (10) mit einem über mehrere miteinander verbundene Streifensegmente (12) gebildeten Trägerstreifen (11), wobei die Streifensegmente (12) Aufnahmen aufweisen, in denen jeweils ein Befestigungselement (20) gelagert ist. Die Streifensegmente (12) sind dabei jeweils gegeneinander verschwenkbar gelagert, wobei die Schwenkachsen der Schwenkverbindung (14) der Streifensegmente (12) jeweils koaxial zu den Befestigungsmitteln (20) verlaufen.

## Beschreibung

Die vorliegende Erfindung betrifft ein Befestigungselemente-Magazinstreifen der im Oberbegriff von Patentanspruch 1 genannten Art. Derartige Befestigungselemente-Magazinstreifen kommen z. B. in handgeführten Setzgeräten bzw. Eintreibgeräten zum Einsatz, mittels denen die an dem Befestigungselemente-Magazinstreifen magazinierten Befestigungselemente in ein Werkstück eingetrieben werden können.

Bei einem aus der US 2003/075466 A bekannten Befestigungselemente-Magazinstreifen sind mehrere als Führungs- und Dämpfungshülsen ausgebildete Streifensegmente zu Ketten miteinander verbunden. In Führungsöffnungen der Streifensegmente sind dabei jeweils Befestigungselemente gelagert. Die Streifensegmente sind über Stege miteinander verbunden, die in einer Richtung senkrecht zur Streifenebene eine geringere Breite aufweisen, wie die Führungs- und Dämpfungshülsen. Durch die geringere Materialstärke senkrecht zur Streifenebene wird zwischen zwei benachbarten Streifensegmenten eine gewisse Elastizität und damit Biegsamkeit des Magazinstreifens erreicht.

Von Nachteil bei diesem bekannten Befestigungselemente-Magazinstreifen ist jedoch, dass er für bestimmte Magazine für Setzgeräte bzw. Eintreibgeräte eine zu geringe seitliche Beweglichkeit aufweist.

Die Aufgabe der vorliegenden Erfindung liegt daher darin, einen Befestigungselemente-Magazinstreifen bereitzustellen, welcher eine hohe seitliche Beweglichkeit aufweist.

Diese Aufgabe wird erfindungsgemäss durch die in Anspruch 1 genannten Massnahmen gelöst. Demnach sind die Streifensegmente jeweils gegeneinander verschwenkbar gelagert, wobei die Schwenkachsen der Schwenkverbindung der Streifensegmente jeweils koaxial zu den Befestigungsmitteln (bzw. zu deren Längsachsen) verlaufen. Hierdurch sind die Streifensegmente entlang einer Schwenkachse gegeneinander verschwenkbar, die koaxial zur Längsachse der Befestigungselemente liegt, wodurch der Befestigungselemente-Magazinstreifen insgesamt eine hohe seitliche Beweglichkeit aufweist.

Vorteilhaft sind jeweils zwei zueinander benachbarte Streifensegmente über jeweils ein Befestigungsmittel kettengliedartig miteinander verbunden, wodurch die Befestigungsmittel selbst eine Schwenklagerachse des Schwenklagers bilden. Ferner können die Befestigungselemente-Magazinstreifens nun in beliebiger Länge erstellt werden.

Von Vorteil ist es ferner, wenn jedes Streifensegment einen hülsenförmigen ersten Abschnitt, einen radial von dem ersten Abschnitt abragenden stegförmigen zweiten Abschnitt und einen an dem zweiten Abschnitt angeordneten ringförmigen dritten Abschnitt aufweist, dessen Ringachse parallel zur Zylinderachse des ersten Abschnitts verläuft und der (dritte Abschnitt) axial ausserhalb der radialen Projektion des ersten Abschnitts liegt. Durch diese Ausgestaltung sind die Streifensegmente spritzgusstechnisch leicht herstellbar.

Bei dem erfindungsgemässen mehrteiligen Trägerstreifen werden ebenso gute Führungseigenschaften des Befestigungselemente-Magazinstreifens, wie bei einem einteilig ausgebildeten Trägerstreifen erreicht, wenn an einem dem dritten Abschnitt abgewandten Ende des ersten Abschnitts ein ringförmiger vierter Abschnitt direkt an den ersten Abschnitt angeformt ist, und der vierte Abschnitt zumindest bereichsweise einen grösseren Durchmesser als der erste Abschnitt aufweist. Dieser grössere Durchmesser kann vorteilhaft zur Führung des Befestigungselemente-Magazinstreifens in einem Magazin genutzt werden.

Die Führungseigenschaften des Befestigungselemente-Magazinstreifens können noch weiter verbessert werden, wenn der dritte Abschnitt zumindest bereichsweise einen grösseren Durchmesser aufweist, als der erste Abschnitt.

In den Zeichnungen ist die Erfindung in einem Ausführungsbeispiel dargestellt.

Es zeigen:
- Fig. 1: einen erfindungsgemässen Befestigungselemente-Magazinstreifen in Seitenansicht,
- Fig. 2: den Befestigungselemente-Magazinstreifen aus Fig. 1 in Aufsicht,
- Fig. 3: zwei Segmente des Befestigungselemente-Magazinstreifens in perspektivischer Darstellung.

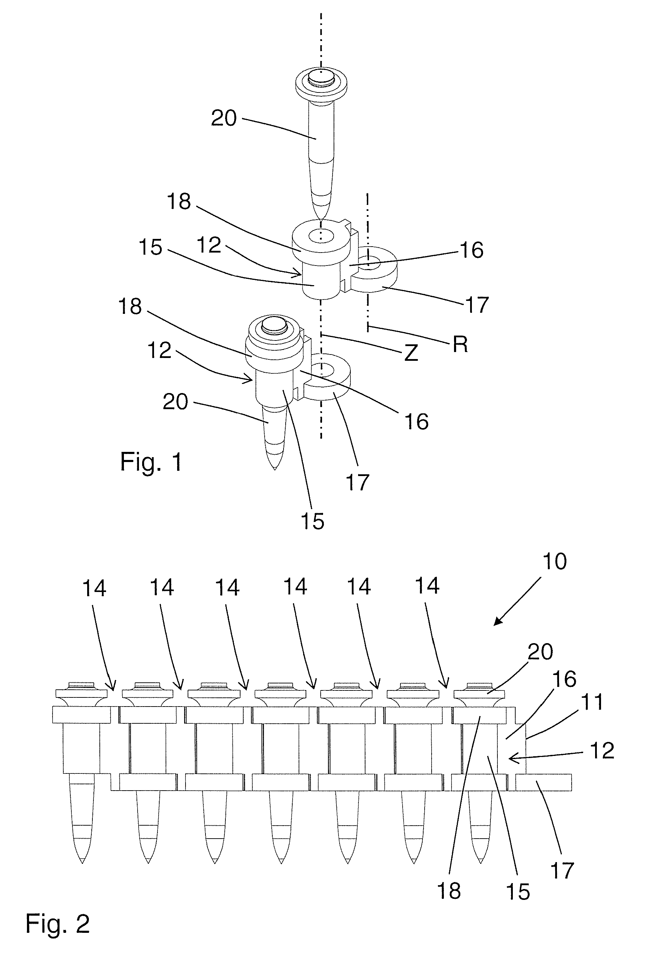

In den Figuren 1 bis 3 ist ein Befestigungselemente-Magazinstreifen 10 (ganz oder in Teilen) wiedergegeben. Der Befestigungselemente-Magazinstreifen 10 weist einen Trägerstreifen 11 auf, der aus mehreren miteinander verbundenen Streifensegmenten 12 aufgebaut ist. Vorzugsweise sind diese Streifensegmente 12 aus einem Kunststoff gefertigt, wie z. B. aus Polyethylen (PE), Polypropylen (PP) oder Polystyrol (PS). Jedes der Streifensegmente 12 weist jeweils eine als Durchführöffnung 13 ausgebildete Aufnahme auf, in der jeweils ein Befestigungselement 20 gelagert ist. Wie insbesondere Fig. 1 zu entnehmen ist, weist jedes Streifensegment 12 einen hülsenförmigen ersten Abschnitt 15, einen radial von dem ersten Abschnitt 15 abragenden stegförmigen zweiten Abschnitt 16 und einen an dem zweiten Abschnitt 16 angeordneten ringförmigen dritten Abschnitt 17 auf. Eine Ringachse R des dritten Abschnitts verläuft dabei parallel zu einer Zylinderachse Z des ersten Abschnitts 15. Ferner liegt der dritte Abschnitt axial ausserhalb der radialen Projektion des ersten Abschnitts 15, d. h. in der in Fig. 1 dargestellten Orientierung liegt der dritte Abschnitt tiefer als der erste Abschnitt 15. Der dritte Abschnitt 17 weist zumindest bereichsweise einen grösseren Durchmesser auf als der erste Abschnitt 15, wodurch der Aussenumfang des dritten Abschnitts 17 als Führungskontur nutzbar ist. An einem dem dritten Abschnitt 17 abgewandten Ende des ersten Abschnitts 15 ist noch ein ringförmiger vierter Abschnitt 18 vorgesehen, der direkt an den ersten Abschnitt 15 angeformt ist. Auch der vierte Abschnitt 18 weist zumindest bereichsweise einen grösseren Durchmesser auf, als der erste Abschnitt 15, sodass auch der Aussenumfang des vierten Abschnitts 17 als Führungskontur nutzbar ist.

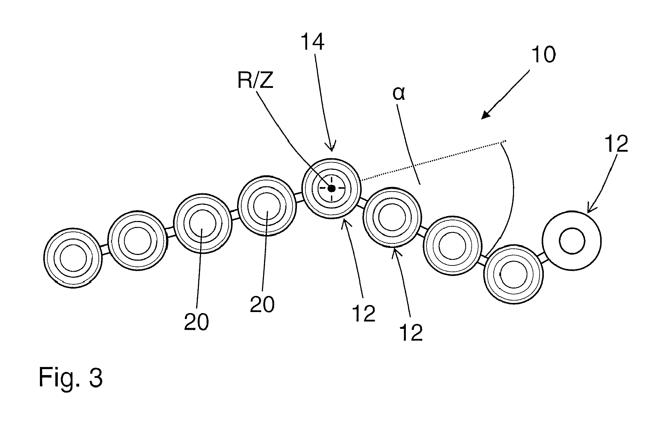

Benachbarte Streifensegmente 12 sind jeweils gegeneinander verschwenkbar, wobei die Schwenkachsen der zwischen zwei benachbarten Streifensegmenten ausgebildeten Schwenkverbindung 14 jeweils koaxial zu den Befestigungsmitteln 20 verlaufen. Wie insbesondere aus Fig. 1 ersichtlich, sind jeweils zwei zueinander benachbarte Streifensegmente 12 über jeweils ein Befestigungsmittel 20 kettengliedartig miteinander verbunden. Die Zylinderachse Z des hülsenförmigen ersten Abschnitts 15 eines Streifensegments 12 liegt koaxial zu der Ringachse R des dritten Abschnitts 17 eines benachbarten zweiten Streifensegments 16, wobei ein Befestigungselement 20 sowohl den hülsenförmigen ersten Abschnitt 15 als auch den ringförmigen dritten Abschnitt 17 durchsetzt und so beide Streifensegmente 16 miteinander verbindet. Die Längsachse des Befestigungselements 20 verläuft somit ebenfalls koaxial zu der Zylinderachse Z und der Ringachse R. Wie insbesondere aus Fig. 3 ersichtlich, kann der erfindungsgemässe Befestigungselemente-Magazinstreifen an den Schwenkverbindungen 14 um ein Befestigungselement 20 herum verschwenkt um einen Winkel alpha verschwenkt werden, der maximal bis zu ca. 170° betragen kann.

## Patentansprüche

1. Befestigungselemente-Magazinstreifen mit einem über mehrere miteinander verbundene Streifensegmente (12) gebildeten Trägerstreifen (11), wobei die Streifensegmente (12) Aufnahmen aufweisen, in denen jeweils ein Befestigungselement (20) gelagert ist,
**dadurch gekennzeichnet,**
**dass** die Streifensegmente (12) jeweils gegeneinander verschwenkbar gelagert sind und die Schwenkachsen der Schwenkverbindung (14) der Streifensegmente (12) jeweils koaxial zu den Befestigungsmitteln (20) verlaufen.

2. Befestigungselemente-Magazinstreifen nach Anspruch 1, **dadurch gekennzeichnet, dass** jeweils zwei zueinander benachbarte Streifensegmente (12) über jeweils ein Befestigungsmittel (20) kettengliedartig miteinander verbunden sind.

3. Befestigungselemente-Magazinstreifen nach Anspruch 1 oder 2, **dadurch gekennzeichnet, dass** jedes Streifensegment (12) einen hülsenförmigen ersten Abschnitt (15), einen radial von dem ersten Abschnitt (15) abragenden stegförmigen zweiten Abschnitt (16) und einen an dem zweiten Abschnitt (16) angeordneten ringförmigen dritten Abschnitt (17) aufweist, dessen Ringachse (R) parallel zur Zylinderachse (Z) des ersten Abschnitts (15) verläuft und der axial ausserhalb der radialen Projektion des ersten Abschnitts (15) liegt.

4. Befestigungselemente-Magazinstreifen nach einem der Ansprüche 1 bis 3, **dadurch gekennzeichnet, dass** an einem dem dritten Abschnitt (17) abgewandten Ende des ersten Abschnitts (15) ein ringförmiger vierter Abschnitt (18) direkt an den ersten Abschnitt (15) angeformt ist, wobei der vierte Abschnitt (18) zumindest bereichsweise einen grösseren Durchmesser aufweist als der erste Abschnitt (15).

5. Befestigungselemente-Magazinstreifen nach einem der Ansprüche 1 bis 4, **dadurch gekennzeichnet, dass** der dritte Abschnitt (17) zumindest bereichsweise einen grösseren Durchmesser aufweist, als der erste Abschnitt (15).
